# EUROPEAN PATENT APPLICATION

(11) **EP 0 887 724 A1**
(43) Date of publication of application: **30.12.1998**
(21) Application number: 98400646.0
(22) Date of filing: 17.03.1998
(51) Int. Cl.: G06F 1/16, G09F 9/00

(54) **Display apparatus**

(71) Applicant: Hewlett-Packard Company, Palo Alto, California 94304 (US)
(72) Inventor: Braun, David, 38000 Grenoble (FR); Hamon, Olivier, 38120 Fontanil-Cornillon (FR)
(74) Representative: Lloyd, Richard Graham

(57) **Abstract**

Display apparatus comprises a support member and a display member, such as a flat panel display, having a display surface. The display member is responsive to an electrical signal to display an image on the display surface and is mounted on the support member so as to be pivotably rotatable from a first viewing position in which the display surface may he viewed from at least a first viewing direction to at least a second viewing position in which the display surface may be viewed from at least a second viewing direction. In normal operation the rotation axis extends horizontally and laterally with respect to the first and second viewing directions. The apparatus comprises a display driver system adapted to modify the generation of the electrical signal so as to invert an image displayed on the display member upon movement of the display member from the first viewing position to the second viewing position whereby a displayed image is viewable in its correct orientation when the display member is in both the first and the second viewing positions.

## Description

### Field of the Invention

The present invention relates to display devices for use with computers, particularly but not exclusively, to such display devices for use in customer service environments.

### Background of the Invention

Many types and configurations of display devices are known for use with computers. For various reasons, some of these have been pivotably mounted on a support structure. For instance, CRT monitors are often provided with tilt/swivel stands so that the position of the display can be adjusted for ergonomic reasons. In this case, the degree of permitted rotation is often very limited. As another example, it has been proposed to provide laptop computers with rotatable displays so that they can be used not only in a conventional open configuration with the display screen vertical, but also in a closed configuration with the display screen horizontal and facing upwards, see for instance US-A-5559670. Further, CRT monitors have been proposed which are rotatable about an axis that is generally perpendicular to the display screen so that the screen can be viewed in either a landscape or portrait mode, see for instance US-A-4542377.

As is well known, customer service environments such as supermarket checkouts, airline check-in facilities and banks, have particular requirements for display devices.

One of these requirements is that a display device may have to be viewed by two people - a customer service representative, check-out clerk or the like and the customer themself.

One way of achieving this is to place a single static display screen where it can be viewed by both parties. This approach is reasonably satisfactory for CRT monitors, although it has ergonomic drawbacks, but is more difficult for flat panel displays because the available viewing angles are more limited.

Another possible approach would be to use a static horizontal tablet display together with special software which enables a displayed image to be flipped to display in the correct orientation by people sitting opposite each other. Such software has been proposed by Portrait Displays, Inc on 11 March 1998 at their website www.portrait.com. Again, this may not be practical because of the viewing angle limitations of flat panel displays, which are more acute in the vertical direction than in the horizontal direction.

A further solution is used in some types of point-of-sale terminals which include a display device that is rotatable about a vertical axis to enable displayed information to be viewed by a customer and a customer service representative.

Whilst these devices are no doubt satisfactory, one problem which can arise with devices of this type is the torsional strain placed on the cable linking the display device with the terminal. This problem is particularly acute if the display is to be rotated through an angle as large as 180° as might be required for example when the customer and customer service representative face each other.

The object of the present invention is to provide display apparatus suitable for use in a customer service environments and having a rotatable display with reduced cable strain.

### Summary of the Invention

In brief, this is achieved by display apparatus comprising a support member and a display member, such as a flat panel display, having a display surface. The display member is responsive to an electrical signal to display an image on the display surface and is mounted on the support member so as to be pivotably rotatable from a first viewing position in which the display surface may be viewed from at least a first viewing direction to at least a second viewing position in which the display surface may be viewed from at least a second viewing direction. In normal operation the rotation axis extends horizontally and laterally with respect to the first and second viewing directions. The apparatus comprises a display driver system adapted to modify the generation of the electrical signal so as to invert an image displayed on the display member upon movement of the display member from the first viewing position to the second viewing position whereby a displayed image is viewable in its correct orientation when the display member is in both the first and the second viewing positions.

Thus the display device is mounted so as to pivot about a horizontal axis so that it can be flipped about the axis, at the same time the image displayed on the screen is inverted so that it is in the correct orientation for a person viewing the image from the other side. The first viewing direction can be the opposite direction from the second viewing direction.

Preferably a switch is provided arranged to be actuated by movement or position of the display member to pass a signal to the display driver system.

In one implementation, the display driver system comprises an input for receiving data representing an image to be displayed, a frame buffer for temporarily storing an image to be displayed, means to read to frame buffer to generate modified data representing an inverted image, and a gating arrangement for either passing data from the input to the display member or the modified data to the display member according to the position of the display member.

### Brief Description of the Drawings

A display system embodying the invention will now be described, by way of non-limiting example, with reference to the accompanying diagrammatic drawings, in which:
**Figure 1** shows a display device in a first position;
**Figure 2** shows a display device in a second position;
**Figure 3** is a schematic diagram showing a display driver system for inverting an image;
**Figure 4** shows the use of the device in a customer service environment.

### Best Mode of Carrying Out the Invention

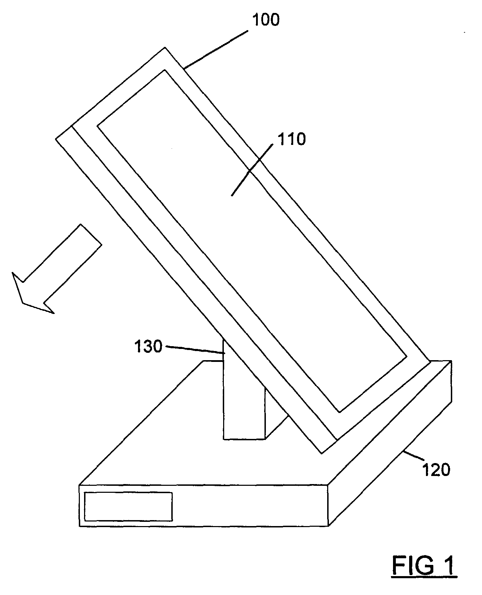

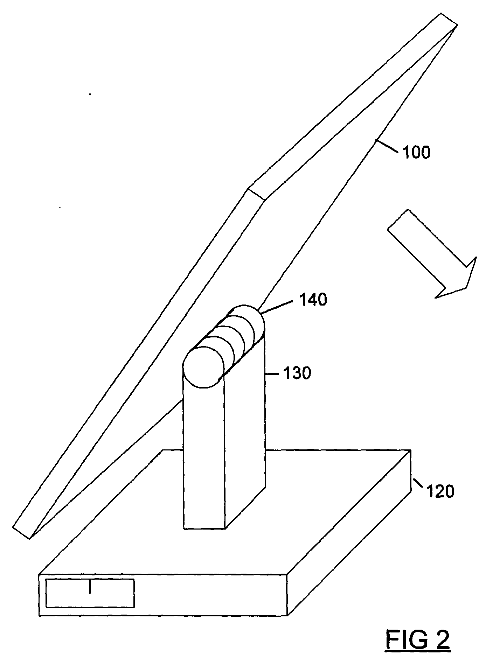

Referring to Figs 1 and 2 there is shown display apparatus comprising flat panel display device 100 having a display screen 110. Flat panel display device 100 can be any suitable flat panel, many different types of which are available commercially. In the preferred embodiment, intended for a customer service application, display device 100 also acts as a data input device and covering the display surface is a resistive touch screen input device. Again, many such touch screen devices are widely available commercially.

Display device 100 is mounted on pedestal 120 and post 130 via hinge 140. Hinge 140 enables the display device to be flipped from the position shown in Fig 1 in which it can be viewed from one side to the position shown in Fig 2 in which it can be viewed from the other side. In the preferred embodiment, post 130 is hollow and electrical connection to the display device is made via ribbon cables which pass through post 120. The cables are placed so that the axis of rotation of the display is across their width. In this configuration, the strain on the cables upon rotation of the display is reduced.

In the preferred embodiment, hinge 140 is placed so that the pivot axis passes through or near the centre of mass of the display so that display is symmetric about the axis. This has aesthetic advantages and provides for easy movement of the display from one position to the other.

Hinge 140 contains a suitable switch device (not shown) which generates a switching signal when the display device is moved from one position to the other. Any suitable type of switching device could be used for this, such as a mercury switch or a non-contact switch employing a photo-sensor for instance. A mercury switching system, although technically advantageous because of contact reliability, may be undesirable for some applications for safety reasons. It will be appreciated that a non-contact switching arrangement would be preferable in many applications because of their reliability. The switch need not be contained in the hinge as long as it is actuated by movement of the display from one position to the other.

The display apparatus is arranged to automatically flip the displayed image on moving from one position to the other so that it is the right way up for viewers facing each other on both sides of the apparatus.

More complex switching arrangements could also be used. For example it would be possible to switch the display so that the screen went blank as the display reached the horizontal position with the display surface facing upwards. Then as the display moves to the second position the inverted image could then appear on the display surface. In this way the viewer would not see an irritating blinking of the image.

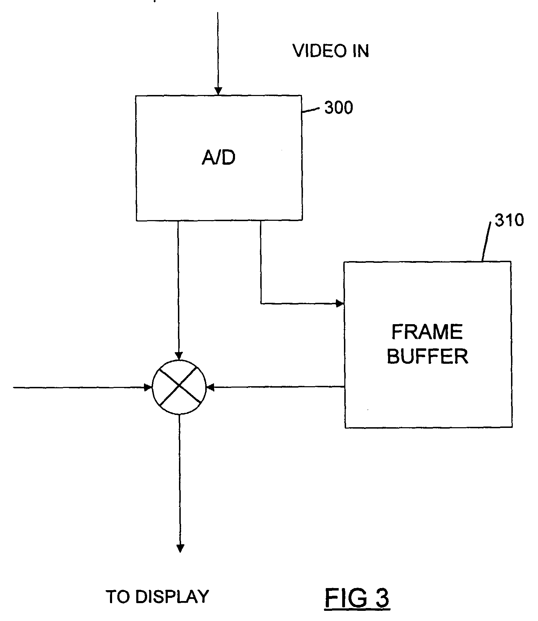

Fig 3 is a schematic diagram showing one embodiment of a driver system that may be used to flip the image in this way. The system takes as input a conventional VGA or super VGA image signal in any mode supported by the display. This analog signal is digitized in any suitable manner by A/D converter 300. The digitized image is temporarily stored in frame buffer 310 in the form of a matrix of pixels. The switching or gating arrangement 320 is arranged to either direct the digitized version of the input image to the display device or to direct an inverted image from the frame buffer 310 to the display device upon receipt of a signal on line 330 which is generated as described above according to the position of the display device. It will be appreciated of course that suitable addressing circuitry is provided to retrieve the pixel data the in the right order from frame buffer 310 so as to provide an inverted image to display 100.

In the case where the display requires an analog video signal, the image can be converted by a second digital to analog converter before being passed to the display.

The advantage of the driver system of Fig 3 is that it stands between the graphics subsystem of the computer to which the display is connected and the display so that the graphics subsystem itself need not be modified. The driver system could be mounted in pedestal 130 or in the display device 100 itself. Other embodiments of the driver system are of course possible. For example it would be possible to feed back a switching signal via pin 9 of a conventional 15-pin VGA connector so that image inversion can be carried out either in hardware or software in the graphics subsystem itself It will be understood that this would require modifications to the graphics hardware and display device driver software. Such modifications are straightforward in principle and would be well understood by the man skilled in the art.

Of course, in embodiments where a touch screen is included, the output from touch screen also needs to be modified to correspond to the inverted image. This can be achieved in a number of ways. Typically such devices operate by measuring the resistances between electrodes placed at the corners of the device. In this case, the output wires from the corners on each side of the device can be switched using a simple switching arrangement. Alternatively a switch signal can be passed back to the touch screen device driver software. Upon receipt of this signal the touch screen device driver software can modify the way that data transmitted from the touch screen is interpreted.

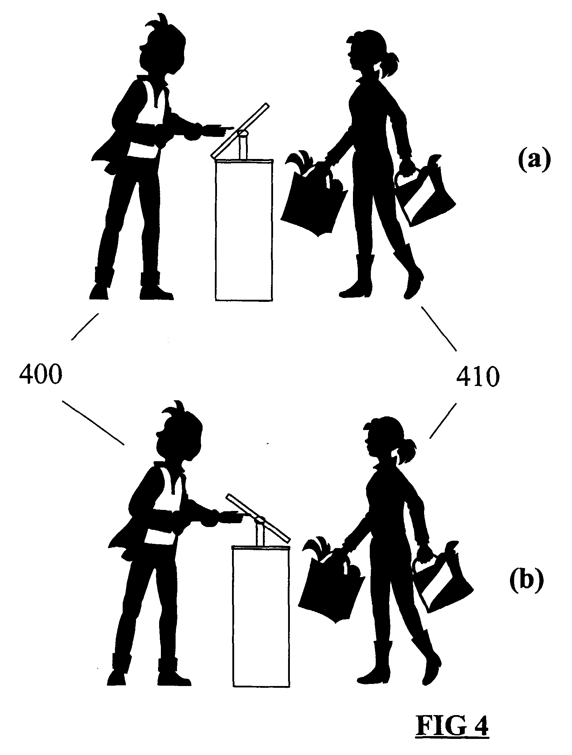

Fig 4 illustrates the application of the display apparatus to a customer service environment. As can be seen from Fig 4, a customer service representative 400 is placed directly opposite a customer 410. Fig 4a illustrates a first position of the display in which it is visible to the customer service representative. Fig 4b illustrates a second position of the display in which it is visible to the customer.

The display apparatus could be merely a display device for connection to a separate computer or point of sale terminal, or could itself contain data processing functionality within, for instance pedestal 130. Pedestal 130 could also of course carry, or be connected to, other input or output devices, such as speakers, a transaction card reader, keyboard or the like.

## Claims

1. Display apparatus comprising a support member and a display member having a display surface, the display member being responsive to an electrical signal to display an image on the display surface and being mounted on the support member so as to be pivotably rotatable from a first viewing position in which the display surface may be viewed from at least a first viewing direction to at least a second viewing position in which the display surface may be viewed from at least a second viewing direction such that in a normal operation the rotation axis extends horizontally and laterally with respect to the first and second viewing directions; the apparatus comprising a display driver system adapted to modify the generation of the electrical signal so as to invert an image displayed on the display member upon movement of the display member from the first viewing position to the second viewing position whereby a displayed image is viewable in its correct orientation when the display member is in both the first and the second viewing positions.

2. Display apparatus as claimed comprising a switch arranged to be actuated by movement or position of the display member to pass a signal to the display driver system.

3. Display apparatus as claimed in claim 1 or claim 2 wherein the display driver system comprises an input for receiving data representing an image to be displayed, a frame buffer for temporarily storing an image to be displayed, means to read to frame buffer to generate modified data representing an inverted image, and a gating arrangement for either passing data from the input to the display member or the modified data to the display member according to the position of the display member.

4. Display apparatus as claimed in any preceding claim wherein the display member is a flat panel display.

5. Display apparatus as claimed in any preceding claim wherein the first viewing direction is the opposite direction from the second viewing direction.

6. Display apparatus as claimed in any preceding claim wherein the rotation axis passes through the centre of mass of the display member.

7. Display apparatus as claimed in any preceding claim comprising a touch sensitive input device overlaying the display surface.
